Europäisches Patentamt

European Patent Office

Office européen des brevets

(11) Veröffentlichungsnummer: **0 261 343**
**A2**

(12) **EUROPÄISCHE PATENTANMELDUNG**

(21) Anmeldenummer: 87110813.0

(51) Int. Cl.⁴: **B05D 1/36** , B05D 5/02

(22) Anmeldetag: 25.07.87

(30) Priorität: 23.08.86 DE 3628704
04.04.87 DE 3711420

(43) Veröffentlichungstag der Anmeldung:
30.03.88 Patentblatt 88/13

(84) Benannte Vertragsstaaten:
AT BE CH DE ES FR GB GR IT LI LU NL SE

(71) Anmelder: Blome GmbH & Co.
Kommanditgesellschaft
Werderstrasse 53a
D-4690 Herne 1(DE)

Anmelder: STRABAG BAU - AG
Siegburger Strasse 241 Postfach 211120
D-5000 Köln 21(DE)

(72) Erfinder: Blome, Peter
Körnerstr. 25
D-4690 Herne 1(DE)
Erfinder: Zilch,Konrad,Dr.-Ing.
Schillerstrasse 8
D-5060 Bergisch Gladbach 1(DE)

(74) Vertreter: Rieder, Hans-Joachim, Dr. et al
Corneliusstrasse 45 Postfach 11 04 51
D-5600 Wuppertal 11(DE)

(54) Verfahren zur Schaffung von Profilierungsvorsprüngen auf kunststoffummantelten Stahlteilen sowie mit Profilierungsvorsprüngen versehene, kunststoffummantelte Stahlteile.

(57) Die Erfindung betrifft ein Verfahren zur Ummantelung von Stahlteilen, auf deren Mantelfläche eine Kunststoffbeschichtung aufgebracht wird, die von einem Umbettungsmaterial umgeben ist und schlägt für eine einfach realisierbare erhöhte Haftung zwischen Kunststoffbeschichtung und Umbettungsmaterial vor, daß auf die noch nicht vollständig ausgehärtete Kunststoffbeschichtung (103) ein körniges Pulver (112) bzw. Granulat derart aufgebracht wird, daß die einzelnen Pulverkörner zur Bildung von Profilierungsvorsprüngen nur teilweise von der Beschichtungsoberfläche (103') aufgenommen sind. Nach einer Variante kann auch vorgesehen ein, daß die Profilierungsvorsprünge von den Seitenflanken einer auf die erhitzte Kunststoffbeschichtung extrudierten Wendelrippe gebildet sind.

FIG. 4

## Verfahren zur Schaffung von Profilierungsvorsprüngen auf kunststoffummantelten Stahlteilen sowie mit Profilierungsvorsprüngen versehene, kunststoffummantelte Stahlteile

Die Erfindung betrifft ein Verfahren zur Ummantelung von Stahlteilen, auf deren Mantelfläche eine Kunststoffbeschichtung aufgebracht wird, die zumindest bereichsweise mit einem Umbettungsmaterial in Kontakt bringbar ist bzw. in Kontakt steht, wobei die von der Außenfläche der Kunststoffbeschichtung gebildete Grenzfläche zum Umbettungsmaterial mit Profilierungsvorsprüngen versehen ist.

Ein derartiges Verfahren geht aus der DE-OS 35 31 618 hervor. Dort wird ein Stahlrohr mit einer thermoplastischen Kunststoffschicht versehen, auf die nachfolgend eine außenliegende Beschichtung auf Betonbasis aufgebracht wird. Die Kunststoffbeschichtung erfolgt durch schraubenlinienförmiges überlappendes Umwickeln mit einem extrudierten Folienband, das mit mindestens einer streifenförmig über die gesamte Länge des Folienbandes verlaufenden Verdickung versehen ist. Die Verdikkung ist an dem Rand des Folienbandes angeordnet, der nicht von einer nachfolgenden Lage des Folienbandes überlappt wird.

Die Betonbeschichtung dient insbesondere dazu, die Rohre zu beschweren, um bei der Verlegung von Off-Shore-Pipelines den hydrostatischen Auftrieb der leeren Rohre durch zusätzliches Gewicht auszugleichen. Bei der Verlegung derartiger Rohre treten erhebliche Zugbelastungen auf, die von den Haltevorrichtungen der Verlegeschiffe über die Ummantelung auf die Stahlrohre übertragen werden. Die streifenförmigen, in die Betonbeschichtung eingebetteten Verdickungen des Folienbandes dienen zu Erhöhung der Haftung zwischen Kunststoffummantelung und dem Betonmantel.

Der Erfindung liegt die Aufgabe zugrunde, ein Verfahren der eingangs genannten Art sowie ein entsprechendes Stahlteil anzugeben, das auf besonders einfache Weise zu einer erhöhten Haftung zwischen Kunststoffbeschichtung und Umbettungsmaterial führt. Insbesondere sollen bei einer thermoplastischen Kunststoffbeschichtung keine Spezial-Extruderdüsen notwendig sein.

Diese Aufgabe wird erfindungsgemäß dadurch gelöst, daß auf die noch nicht vollständig ausgehärtete Kunststoffbeschichtung ein körniges Pulver bzw. Granulat derart aufgebracht wird, daß die einzelnen Pulverkörner zur Bildung der Profilierungsvorsprünge nur teilweise von der Beschichtungsoberfläche aufgenommen sind. Durch die noch nicht vollständige Verfestigung der Kunststoffbeschichtung kann das Pulver nur zum Teil in die Kunststoffbeschichtungsoberfläche eindringen; d.h. die einzelnen Körnchen des Pulvers überragen aufgrund ihrer Teileinbettung mit einem Oberflächenbereich die Kunststoffbeschichtungsoberfläche. Auf diese Art und Weise wird ein Rauhbelag geschaffen, der die Beschichtungsoberfläche zum einen erheblich vergrößert und zum anderen Vorsprünge schafft, die beim Einbetten des Stahlteils von der Einbettungsmasse, vorzugsweise Beton oder auf Betonbasis beruhendes Umbettungsmaterial, umfaßt werden. Die Verbundhaftung zwischen diesem beschichteten Stahlteil und der Einbettungsmasse wird somit erheb lich erhöht. Die Erfindung ist somit bei Betonstahl als auch bei der Bildung eines Stahlbaustoßes von Vorteil. Bei dem Stahlbaustoß, der nicht in einer Einbettungsmasse eingelagert wird, werden zwei Stahlbauteile unter Spannung aneinander befestigt. Die dabei auftretenden Schubspannungen werden durch Oberflächenreibung der beiden Bauteile aneinander übertragen. Durch den erfindungsgemäßen Rauhbelag wird die Oberflächenreibung erheblich erhöht, was für die Kraftübertragung von Vorteil ist. Auf ein nach dem Stand der Technik vorgesehenen gleitfesten Anstrich braucht nicht zurückgegriffen zu werden. Die Kunststoffbeschichtung schützt das Stahlbauteil ferner vor Korrosionsschäden. Dabei kann die Kunststoffbeschichtung aus einem Thermoplast oder aber auch einem Epoxyd-Harz bestehen. Bei der Beschichtung mit einem Thermoplast, z.B. Polyäthylen, wird das zu beschichtende Stahlbauteil erhitzt und auf die erhitzte Oberfläche der Kunststoff, z.B. in Form eines extrudierten Folienbandes oder Folienschlauches, aufgebracht. Die Ausbildung der Profilierungsvorsprünge als vorstehende Pulver-bzw.Granulatkörner führt mit einfachen Mitteln zu einer sehr großen Widerlagerfläche zum Umbettungsmaterial, so daß eine außerordentlich gute Verbundhaftung zwischen diesen Teilen zu erzielen ist.

Nach einer Weiterbildung der Erfindung ist vorgesehen, daß als Pulver Kunststoffpulver aufgebracht wird. Ein Rauhbelag wird jedoch auch bei Verwendung von keramischem Pulver oder Gesteinsmehl (z.B. Sand) gebildet. Auch ist die Verwendung von metallischem Pulver möglich, wobei jedoch sicherzustellen ist, das dieses nicht bis auf die Stahloberfläche vordringt, da sonst der Korrosionsschutz in Frage steht.

Es kann angezeigt sein, für die Kunststoffbeschichtung und das Pulver den gleichen Werkstoff zu verwenden.

Der Verfahrensablauf kann so getroffen sein, daß als Kunststoffbeschichtung eine Thermoplastschicht, insbesondere eine Polyäthylenschicht, aufgetragen wird, die sich beim Aufbringen des Pulvers durch Wärmebehandlung in gelierendem Zustand befindet.

Vorzugsweise kann dabei die Restwärme genutzt werden, die das Stahlteil unmittelbar nach der Kunststoffbeschichtung noch besitzt. Wird auf den gelierenden Beschichtungsfilm der Kunststoffbeschichtung das Pulver aufgebracht, so dringt es teilweise in die Oberfläche des Beschichtungsfilms ein und verklebt mit diesem. Sofern nach einer bevorzugten Ausführungsform der Erfindung als Pulver ein Thermoplastpulver, insbesondere ein Polyäthylenpulver, aufgetragen wird, wird dieses durch die Restwärme angeschmolzen, wobei es jedoch nicht gänzlich von dem gelierenden Beschichtungsfilm aufgenommen wird. Durch das Anschmelzen wird eine innige Verbindung zu der sonstigen Kunststoffbeschichtung hergestellt.

Mit Vorzug wird für die Kunststoffbeschichtung und/oder das Pulver Polyäthylen und/oder Äthylencopolymer eingesetzt.

Nach einer weiteren Ausführungsform der Erfindung ist vorgesehen, daß als Kunststoffbeschichtung eine Duroplastschicht, insbesondere eine Epoxyd-Harz-Schicht aufgetragen wird, die sich beim Aufbringen des Pulver aufgrund noch nicht vollständiger Aushärtung in noch klebrigem Zustand befindet. Erfindungsgemäß wird somit vor der Verfestigung der Kunststoffbeschichtungsoberfläche das Pulver aufgetragen, so daß sich die einzelnen Körner des Pulvers unter Ablauf eines chemischen Reaktions-Prozesses homogen mit der Kunststoffschicht verbinden und auf diese Weise festgelegt werden. Vorzugsweise wird als Pulver ein Duroplastpulver, insbesondere Epoxyd-Harz-Pulver aufgetragen.

Für eine einfache Pulverbeschichtung ist vorgesehen, daß das Pulver auf die Kunststoffbeschichtung aufgeblasen wird. Das Auftragen des Pulvers kann dabei vorzugsweise durch ein elektrostatisches Feld unterstützt werden. Als Alternative zum Aufblasen kann das Pulver auch aufgestreut aufgeworfen oder fluidisiert aufgebracht werden.

Das ·Pulver kann auch relativ grobkörnig sein, so daß es ein Granulat darstellt, daß vorzugsweise aus den genannten Materialien besteht.

Ferner betrifft die Erfindung ein Verfahren zur Ummantelung von Stahlteilen, insbesondere Rohren, auf deren Mantelfläche eine Kunststoffbeschichtung aufgebracht wird, die zumindest mit einem Umbettungsmaterial in Kontakt bringbar ist bzw. in Kontakt steht, wobei die von der Außenfläche der Kunststoffbeschichtung gebildete Grenzfläche zum Umbettungsmaterial mit Profilierungsvorsprüngen versehen ist und wobei die Profilierungsvorsprünge von den Seitenflanken einer auf die erhitzte Kunststoffbeschichtung extrudierten Wendelrippe gebildet sind. Handelt es sich bei dem Stahlbauteil um einen länglichen Gegenstand, z.B. ein Rohr, so bilden die Profilierungsvorsprünge quer zur Längsrichtung des Gegenstandes liegende Stufen aüs. Zufolge derartiger Ausgestaltung ergibt sich ein schubfester Verbund zwischen der Kunststoffummantelung und dem Umbettungsmaterial, das vorzugsweise als Beton-Ummantelung ausgebildet sein kann. Werden derartige als Rohre ausgebildete Stahlbauteile in der See verlegt, so werden die zwischen dem Ummantelungsmaterial und dem Rohr auftretenden Längsverschiebungskräfte durch den durch die Profilierungsvorsprünge gebildeten Formschluß aufgefangen. Aufgrund der Wendelrippe werden quer zur Längsrichtung des Rohres liegende Stufen ausgebildet. Die Größe der Stufen ist dabei abhängig von dem Durchmesser des Rohres bzw. von dem Gewicht der Betonummantelung und des Stahlrohres selbst. Erfindungsgemäß ist vorgesehen, daß zunächst die Kunststoffbeschichtung auf das Stahlteil aufgebracht und anschließend die Wendelrippe auf diese Beschichtung extrudiert wird. Bei der Kunststoffbeschichtung handelt es sich vorzugsweise um eine Thermoplastschicht, so daß das Nacheinanderaufbringen von Beschichtung und Wendelrippe zu dem Vorteil führt, daß keine speziellen Extruderdüsen eingesetzt werden müssen, wie sie aus dem Stand der Technik (DE-OS 35 31 618) bekannt sind, welche die Beschichtung und die Rippe gleichzeitig erzeugen. Vielmehr erfolgt die Beschichtung erfindungsgemäß unabhängig von der Rippenausformung, so daß -je nach Anwendungsfall-jeweils die form-oder größenmäßig richtige Extruderdüse für die Rippe unabhängig von der Extruderdüse für die Kunststoffbeschichtung ausgewählt werden kann. Mithin kann die Beschichtungsanlage sehr schnell auf den jeweils gewünschten Anwendungsfall durch einfachen Austausch der Wendelrippen-Extruderdüse angepaßt werden.

Ferner ist vorgesehen, daß zeitlich unmittelbar nach dem Aufbringen der thermoplastischen Kunststoffbeschichtung auf diese die Wendelrippe unter Beaufschlagung der Bahnaußenseite und/oder der Befestigungsseite der Wendelrippe mit einer Wärmequelle zur Aufrechterhaltung der Oberflächen-Schmelztemperatur aufgebracht wird. Das sich nach dem Aufbringen der Kunststoffbeschichtung noch im heißen Zustand befindliche Stahlbau teil wird somit sofort anschließend mit der Rippe versehen, was energietechnisch sinnvoll ist. Um einen festen Verbund zwischen Kunststoffbeschichtung und Rippe sicherzustellen, ist die Kunststoffbeschichtung bzw. die Befestigungsseite der Rippe auf Oberflächen-Schmelztemperatur zu halten. Es genügt dabei, wenn nur einige μm der entsprechenden Oberfläche in angeschmolzenem Zustand gehalten werden. An der Berührungsstelle erfolgt eine innige Verschmelzung.

Nach einer Weiterbildung der Erfindung kann vorgesehen sein, daß die aufgebrachte Kunststoffbeschichtung bis zum Aufbringen der Wendelrippe zur Erhöhung der Strukturfestigkeit der Kunststoffbeschichtung gekühlt wird. Dieses hat den Vorteil, daß die abgekühlte Kunststoffbeschichtung in der Lage ist, Kräfte auszunehmen, so daß die von der Wendelrippe anschließend ausgeübten, durch deren · Abkühlung verursachten Schrumpfspannungen schadensfrei aufgenommen werden können. Das bei der Rippenaufbringung erfolgende erneute Anschmelzen der Oberfläche der Kunststoffbeschichtung stört dabei nicht, denn das Aufschmelzen erfolgt nur in einem Tiefenbereich von wenigen μm, was der durch die Abkühlung im übrigen Bereich erzielten Strukturfestigkeit keinen Abbruch tut.

Ferner betrifft die Erfindung ein mit Kunststoffbeschichtung versehenes Stahlbauteil, das zumindest bereichsweise in ein Umbettungsmaterial einbettbar bzw. eingebettet ist und wobei die von der Außenfläche der Kunststoffbeschichtung gebildete Grenzfläche zum Umbettungsmaterial mit Profilierungsvorsprüngen versehen ist. Hierbei ist vorgesehen, daß die Profilierungsvorsprünge (Rauhbelag) der Kunststoffbeschichtung von die Beschichtungsmantelfläche überragenden Pulverkörnern bzw. Granulatkörnern gebildet sind. Bei dem Pulver handelt es sich vorzugsweise um ein Kunststoffpulver oder Kunststoff-Granulat. Für Kunststoffbeschichtung und Pulver kann der gleiche Werkstoff vorgesehen sein.

Überdies besteht ein vorteilhaftes Merkmal darin, daß eine unterschiedliche Härte der Profilierungsvorsprünge und der Kunststoffbeschichtung, insbesondere der extrudierten Bahn, vorgesehen ist. Ein besonders fester Verbundeingriff zum Umbettungsmaterial läßt sich insbesondere dadurch erzielen, daß die Profilierungsvorsprünge aus dem härteren Material bestehen.

Die Anordnung kann so getroffen sein, daß das Umbettungsmaterial zu Fixierung des insbesondere als Rohr ausgebildeten Stahlteils ortsfest angeordnet ist. Insbesondere kann das Umbettungsmaterial als ein im Erdreich festlegbarer Ankerblock ausgebildet sein. Hierdurch wird die Möglichkeit eröffnet, beispielsweise bei einer Pipeline die einzelnen, zusammengeschweißten Rohre an bestimmten Punkten ortsfest zu fixieren. Durch Festlegung des vorzugsweise aus Beton bestehenden Ankerblockes im Erdreich ist an dieser Stelle das Stahlrohr fixiert, da aufgrund der erfindungsgemäßen Profilierungsvorsprünge ein fester Verbund zwischen Stahlrohr und Ankerblock besteht.

Nach einer Variante ist vorgesehen, daß für eine Fixierung des mit Profilierungsvorsprüngen versehenen Stahlbauteils ein mit Halteankern versehener Rohrabschnitt das Stahlbauteil umgibt, wobei der Rohrabschnitt an seiner Innenseite mit einer Axialkräfte aufnehmenden Profilierung versehen ist und der Ringraum zwischen Stahlbauteil und Rohrabschnitt mit einer ausgehärteten Verbundmasse gefüllt ist. Auch hierdurch läßt sich das Stahlbauteil, z.B. ein Rohr, ortsfest fixieren, indem die Halteanker beispielsweise an einem Betonfundament verankert oder an einer entsprechenden Konstruktion befestigt werden. Über die Halteanker ist der Rohrabschnitt fixiert, der wiederum über die ausgehärtete Verbundmasse mit den Profilierungsabschnitten unverschieblich in Verbindung steht. Eine Verschiebung der Verbundmasse ist ausgeschlossen, da diese einerseits in die Profilierungsvorsprünge der Beschichtung eingreift und andererseits von der Innenseitenprofilierung des Rohrabschnittes gehalten ist.

Als Verbundmasse kann beispielsweise Beton eingesetzt werden, vorzugsweise kommt jedoch Kunstharz zum Einsatz.

Als Profilierung der Innenseite des Rohrabschnittes bietet sich ein dort befestigter Wendelsteg, z.B. ein aufgeschweißter Stahlwendelsteg an, sofern der Rohrabschnitt ebenfalls aus Stahl besteht.

Die Zeichnungen veranschaulichen die Erfindung anhand mehrerer Ausführungsbeispiele, und zwar zeigt:

Fig. 1 ein mit Beschichtung versehenes Stahlteil,

Fig. 2 einen Querschnitt durch das Stahlteil entlang der Linie II-II in Fig. 1,

Fig. 3 einen Querschnitt durch das beschichtete Stahlteil gemäß einem weiteren Ausführungsbeispiel der Erfindung,

Fig. 4 in perspektivischer Darstellung ein Stahlrohr gemäß einer weiteren Ausführungsform,

Fig. 5 einen Abschnitt des Rohres im Längsschnitt,

Fig. 6 in schematischer Darstellung das Aufbringen einer extrudierten Bahn nebst Rippe auf ein Stahlrohr,

Fig. 7 einen ausschnittsweisen Längsschnitt durch das Rohr gemäß einer mit Pulver-bzw. Granulatkörpern versehenen Ausführungsform,

Fig. 8 ebenfalls im schematischer Darstellung das Aufbringen der extrudierten Bahn auf das Rohr und der Pulverkörner bzw. Granulate auf die Bahn,

Fig. 9 eine perspektivische, schematische Ansicht eines als Rohr ausgebildeten Stahlteils, das mittels eines Ankerblockes festgelegt ist, wobei die Profilierungsvorsprünge von Pulverbzw. Granulatkörnern gebildet sind,

Fig. 10 eine Darstellung gemäß Fig. 9, wobei jedoch die Profilierungsvorsprünge von einer Wendelrippe gebildet sind,

Fig. 11 eine teilweise als Schnittansicht ausgebilde te Darstellung, in der ein Rohr mittels eines Rohrabschnitts fixiert ist, wobei als Profilierungsvorsprünge Pulver-bzw. Granulatkörner auf die Kunststoffbeschichtung des Rohres aufgebracht sind und

Fig. 12 eine Ansicht gemäß Fig. 11, wobei jedoch als Profilierüngsvorsprünge eine Wendelrippe vorgesehen ist.

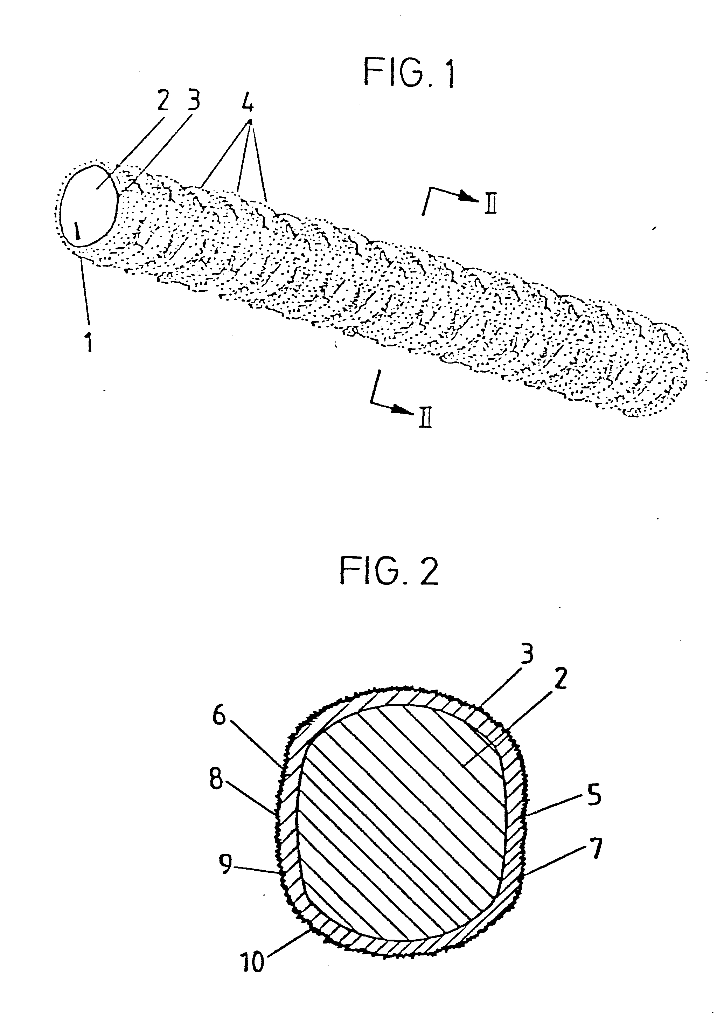

Die Fig. 1 zeigt ein Stahlteil 1, das als stangenförmiger Betonstahl 2 ausgebildet ist. Die Oberfläche 2 weist Erhebungen 4 auf, um einen möglichst festen Halt beim Einbetten in Beton zu erhalten.

Gemäß Fig. 2 ist auf die Oberfläche 3 des Betonstahls 2 eine Kunststoffbeschichtung 5 aufgebracht. Bei der Kunststoffbeschichtung 5 handelt es sich um eine Polyäthylenschicht 6. Auf die Oberfläche 7 der Polyäthylenschicht 6 ist ein Pulver 8 aufgebracht, das einen Reibbelag 9 bildet; d.h. die einzelnen Körner des Pulvers 8 bilden eine rauhe Oberflächenstruktur. Bei dem Pulver 8 handelt es sich vorzugsweise um Polyäthylen-Pulver, das durch Wärmebehandlung angeschmolzen, jedoch nicht gänzlich von der Oberfläche 7 aufgenommen ist.

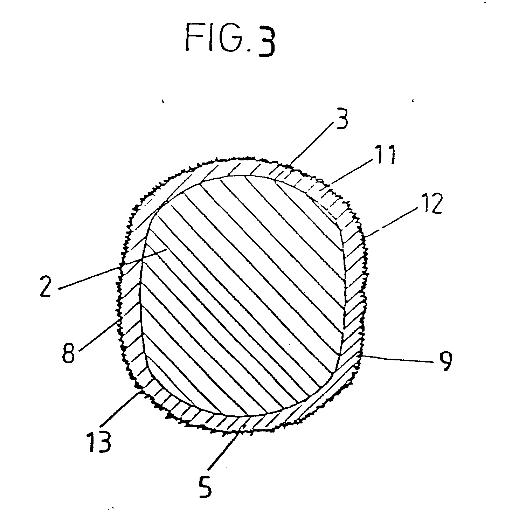

Die Fig. 3 zeigt ein weiteres Ausführungsbeispiel der Erfindung, wobei es sich ebenfalls um einen Querschnitt durch ein Betonstahl 2 handelt. Gegenüber dem zuvor beschriebenen Ausführungsbeispiel besteht jedoch der Unterschied, daß als Kunststoffbeschichtung 5 eine Epoxyd-Harz-Schicht 11 aüfgetragen ist, in deren Oberfläche 12 die Körner des Pulvers 8 teilweise aufgenommen sind. Als Pulver 8 wird vorzugsweise ein Duroplast-Pulver 13, vorzugsweise ein Epoxyd-Pulver verwendet.

Je nach noch vorhandener Viskosität der Kunststoffbeschichtung zum Zeitpunkt des Aufbringens des Pulvers läßt sich ein mehr oder weniger tiefes Eindringen der Körnung einstellen. Abhängig von Diffusionsgrad und -tiefe des Pulvers in die Kunststoffbeschichtung läßt sich die Oberflächenrauhigkeit variieren, z.B. ähnlich einer Orangenhaut, bis zum scharfkantigen, großflächigen Hervortreten der Körner.

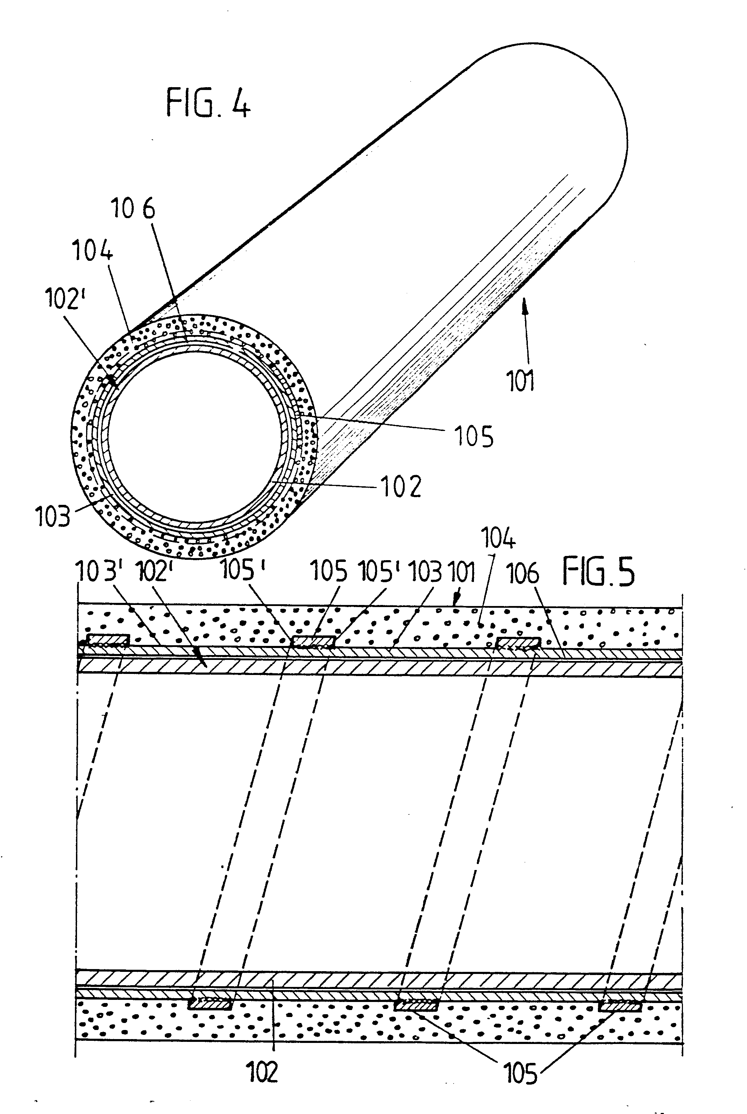

Das als Pipeline-Rohr ausgebildete Rohr 101 besitzt gemäß Fig. 4 ein inneres, oberflächenkonditioniertes ein Stahlteil 102 darstellendes Stahlrohr 102. Bezüglich der Konditionierung kann es sich bspw. um eine Phospatisierung handeln. Weiterer Bestandteil des Pipelinerohres 101 ist eine das Stahlrohr 102 umgebene innere Ummantelung 103 aus Kunststoff. Hierfür eignen sich insbesondere Thermoplaste. Sodann ist noch eine äußere Ummantelung 104 aus armiertem Beton vorgesehen.

Um die Längsschiebehaftung zwischen dem ummantelten Stahlrohr 102 und Beton-Ummantelung 104 optimal zu gestalten, ist gemäß der Ausführungsform der Fig. 5 eine von der inneren Ummantelung 103 ausgehende, wendelförmig verlaufende Rippe 105 vorgesehen. Die Seitenflanken 105' der Wendelgänge der in Flachform gestalteten Rippe 105 stellen Profilierungsvorsprünge dar, welche in die Beton-Ummantelung 104 ragen und zu einem Formschluß führen. Die wendelförmig aufgebrachte Rippe 105 geht von der Mantelfläche 103' der inneren Ummantelung 103 aus und ist fest mit dieser verbunden. Bezüglich der Rippe 105 handelt es sich ebenfalls um thermoplastisches Material, welches gegenüber demjenigen der inneren Ummantelung 103 härter gewählt ist.

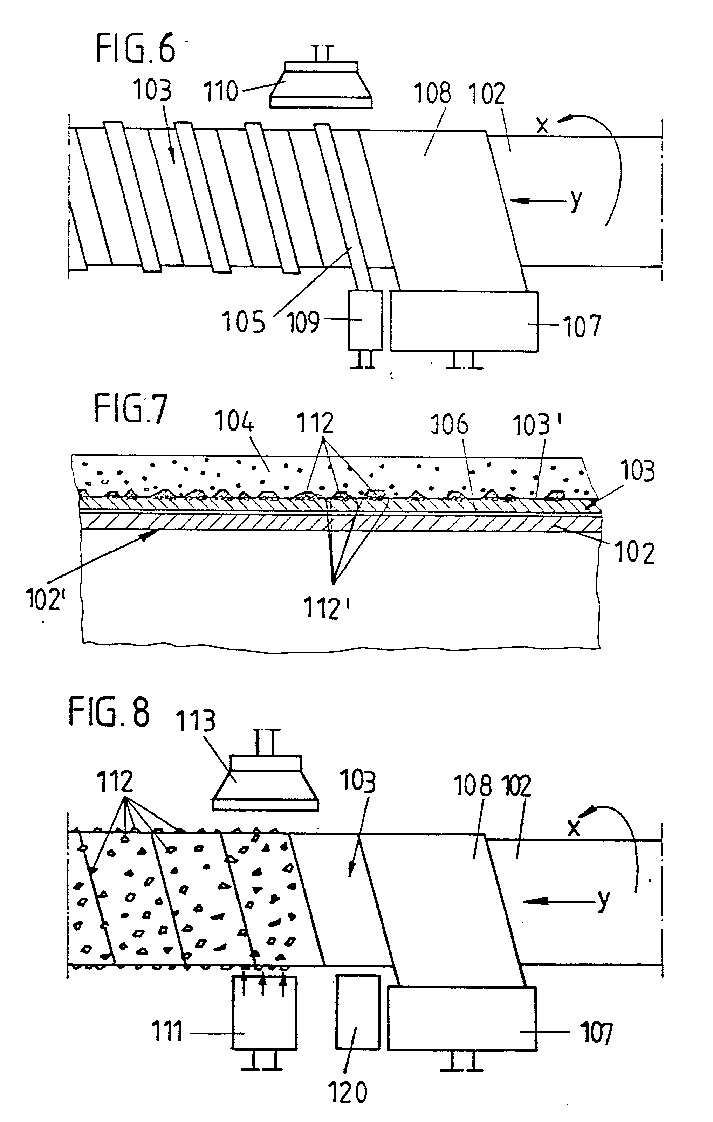

Das Beschichten des oberflächenkonditionierten Rohres 102 mit der innere Ummantelung 103 geht aus Fig. 6 hervor. Auf das mit einer dünnen Klebeschicht 106 versehene Stahlrohr 102 wird eine aus einer Extruderdüse 107 kommende Bahn 108 aufgewickelt. Das Stahlrohr 102 führt dabei eine überlagerte Bewegung aus. Neben einer Drehung in Pfeilrichtung x wird es in Pfeilrichtung y längs der Extruderdüse 107 vorbeibewegt. Auf diese Weise wird die extrudierte Bahn 108 auf das Stahlrohr 102 aufgewendelt und bildet die innere Ummantelung 103. Das Rohr wird während dieses Aufbringens auf die erforderliche Temperatur erwärmt.

Der Extruderdüse 107 ist eine Zusatzextruderdüse 109 benachbart. Durch diese wird die Rippe 105 geformt, welche auf die Ummantelung 103 wendelförmig aufgewickelt wird. Dieses Aufbringen der Rippe 105 erfolgt bei Verschmelzungstemperatur derart, daß kein Durchschmelzeffekt entsteht. Da das Aufbringen der Rippe 105 nachgeordnet ist, wird zur Erzielung einer ausreichenden Schmelztemperatur ein Infrarotstrahler 110 in Gegenüberlage der Zusatzextruderdüse 109 installiert.

Das Umschichten des mit der inneren Ummantelung 103 und der Rippe 105 versehenen Rohres kann dann in einem nachfolgenden Arbeitsgang in der üblichen Weise geschehen, wobei der Beton in die Zwischenräume zwischen den Wendelgängen tritt. Letztere bilden quer zur Längsrichtung des Rohres liegende Stufen, die in Achsrichtung zu einer großen Lagenstabilität des Betonsmantels auf dem Stahlrohr 102 führen. Die Fig. 7 und 8 veranschaulichen die Herstellung der Ausführungsform eines als Rohr ausgebildeten Stahlbauteils, wobei -wie zuvor-die innere Ummantelung 103 in gleicher Weise aufgebracht wird, indem eine aus der Extruderdüse 107 kommende Bahn 108 auf das eine überlagerte Bewegung ausführende Stahlrohr 102 aufgewendelt wird.

Abweichend von der zur vorigen Ausführungsform ist der Extruderdüse 107 eine Beschickungseinrichtung 111 nachgeordnet. Diese enthält vorgewärmte, gemahlene, aus Kunststoff bestehende Pulver 112 bzw. Granulate, die in geeigneter Weise auf das kunststoffummantelte Rohr aufgebracht werden. In gegenüberlage zur Beschickungseinrichtung 111 ist ebenfalls ein Infrarotstrahler 113 angeordnet, der die vorschriftsmäßige Verschmelzungstemperatur erzeugt. Die Granulate 112 treten in Verbindung zur inneren Ummantelung 103, und zwar ohne Durchschmelzeffekt, so daß auf diese Weise die Mantelfläche 103' der Ummantelung 103 überragende Profilierungsvorsprünge gebildet sind, vergl. insbesondere Fig. 7. Die Granulat-Profilierungsvorsprünge 112 formen ebenfalls quer zur Längsrichtung des Rohres verlaufende Stufen 112', die zu einem Formschluß zwischen Beton-Ummantelung 104 und innerer Ummantelung 103 führen.

Je nach Einsatzzweck und Größe der Rohre können die Pulverkörner bzw Granulate in ihrer Größe variieren. Auch bei dieser Version können die Granulate 112 eine größere Härte besitzen als die innere Ummantelung 103.

Vorteilhaft ist es, wenn die aufgebrachte Kunststoffbeschichtung bis zum Aufbringen der Wendelrippe zur Erhöhung der Strukturfestigkeit der Kunststoffbeschichtung gekühlt wird. Eine Einrichtung zur Kühlung der Kunsttoffbeschichtung ist in der Fig. 8 schematisch dargestellt und mit der Bezugsziffer 120 gekennzeichnet. Die Kühleinrichtung 120 liegt zwischen der Extruderdüse 107 für die Kunststoffbeschichtung und der Beschickungseinrichtung 111 für das Aufbringen der Profilierungsvorsprünge. Eine derartige Kühleinrichtung kann ferner auch bei dem Ausführungsbeispiel gemäß Fig. 6 vorgesehen sein (nicht dargestellt); sie würde dann zwischen der Extruderdüse 107 und der Zusatzextruderdüse 109 liegen. Durch die Kühlung der unter Hitzeeinwirkung aufgebrachten Kunststoffbeschichtung erlangt diese eine Strukturfestigkeit, so daß die nach der anschließend aufgebrachten Wendelrippe auftretenden Schrumpfspannungen beim Abkühlen aufgenommen werden können, ohne daß eine Beschädigung der Beschichtung auftritt. Durch die Kühlung wird jedoch auch die Oberflächentemperatur der Kunststoffbeschichtung derart weit herabgesetzt, daß das anschließende Aufbringen der Profilierungsvorsprünge nicht erfolgen kann. Hier schaffen jedoch Wärmequellen (Infrarotstrahler 110, Infrarotstrahler 113) Abhilfe, in dem sie lediglich die Oberfläche der Rohrbeschichtung nur einige µm tief wieder anschmelzen, so daß eine innige Verbindung zu den jeweiligen Profilierungsvorsprüngen geschaffen wird. Die durch die Kühlung gechaffene Strukturfestigkeit bleibt dabei im wesentlichen erhalten. Mittels der Kühlung läßt sich bei dem Ausführungsbeispiel der Fig. 8 auch die Eindringtiefe der Pulverkörper 112 bzw. Granulatkörner steuern.

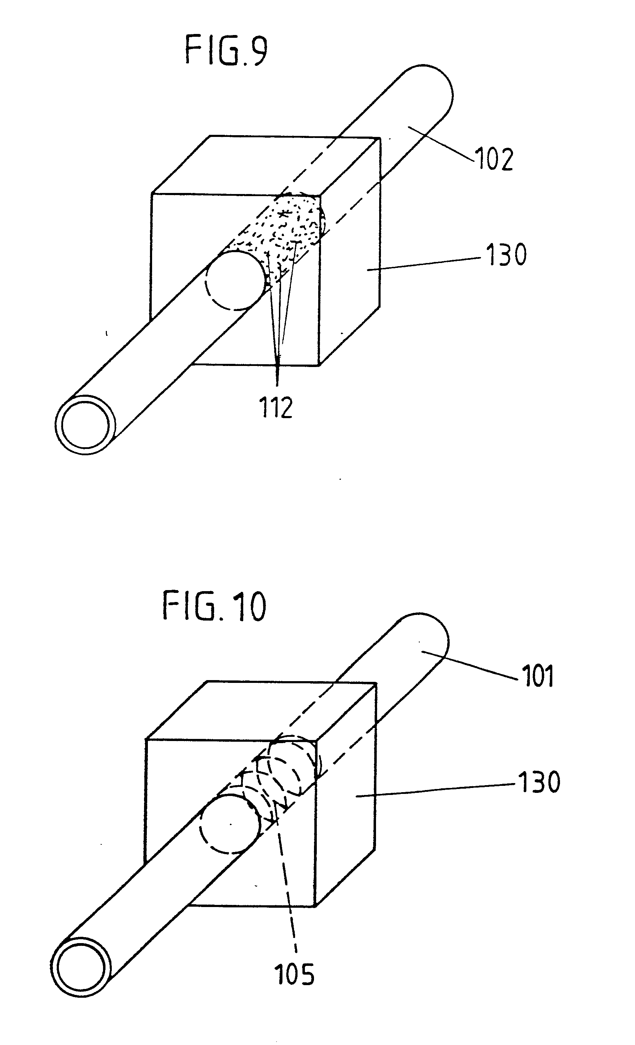

Erfindungsgemäß ist vorgesehen, ein mit Kunststoffbeschichtung und Profilierungsvorsprüngen versehenes Stahlteil mittels des Umbettungsmaterials festzulegen. Dieses ist in der Fig. 9 dargestellt, wobei es sich bei dem Stahlteil um ein kunststoffummanteltes Rohr mit eingeschmolzenen Pulver-bzw. Granulatkörnern handelt, wie es in der Fig. 8 dargestellt ist. Hierzu sei noch erwähnt, daß die Kunststoffbeschichtung nicht durch Extruderwickel erzeugt zu sein braucht, vielmehr ist es alternativ auch möglich einen Schlauch zu extrudieren, der auf das Stahlrohr aufgebracht wird. Gemäß Fig. 9 ist das Umbettungsmaterial nicht -wie zuvor beschrieben-als das Rohr umgebende, vorzugsweise aus Beton bestehende Röhre ausgebildet, sondern bildet einen quaderförmigen Block 130. Vorzugsweise kann dieser Block 130 aus Beton bestehen und sich nur über eine Teillänge des Rohres erstrecken. Das ummantelte Rohr 102 weist zumindest im Bereich des Blockes 130 auf seiner Kunststoffbeschichtung Pulver-bzw. Granulatkörner 112 auf, so daß eine innige Verbindung zwischen dem Block 130 und der Kunststoffbeschichtung besteht. Das den Block 130 durchsetzende Rohr 102 ist insofern unverschieblich relativ zum Block 130 festgelegt. Der Block 130 kann einen Ankerblock bilden wenn dieser beispielsweise im Erdreich eingegraben oder auf andere Weise festgelegt wird. Beispielsweise kann man bei Pipelines auf diese Art und Weise Fixpunkte schaffen, die das sich bei Wärme ausdehnende und bei Kälte zusammenziehende Rohr festlegen.

In der Fig. 10 ist ein weiteres Ausführungsbeispiel dargestellt, daß sich von dem der Fig. 9 lediglich dadurch unterscheidet, dãß das Rohr als Wendelrippe 105 ausgebildete Profilierungsvorsprünge aufweist.

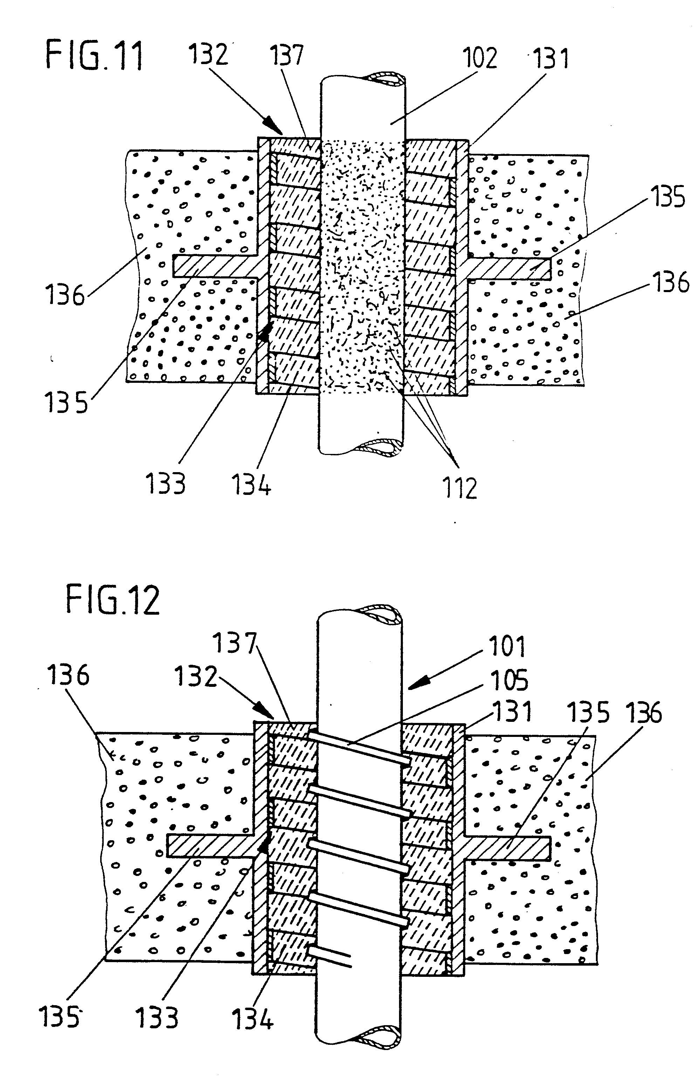

Eine weitere Ausführungsvariante zur Festlegung des Rohres ergibt sich aus Fig. 11. Das Rohr 102 wird bereichsweise von einem Rohrabschnitt 131 koaxial umgeben, wobei zwischen Rohr 102 und Rohrabschnitt 131 ein Ringraum 132 geschaffen wird. An der Innenseite des Rohrabschnittes 131 ist eine Profilierung 133 ausgebildet, die als mit der Innenseite des Rohrabschnittes 131 verbundener Wendelsteg 134 ausgebildet sein kann. Der Wendelsteg 134 bildet Stuf=n in Axialrichtung des Rohrabschnites aus. Das Rohr 102 ist kunststoffbeschichtet und weist zumindest im Bereich des Rohrabschnittes 131 Profilierungsvorsprünge auf, die gemäß Fig. 11 als Pulver-bzw. Granulatkörner 112 ausgebildet sind. An der Außenseite des Rohrabschnittes 131 sind Halteanker 135 befestigt, die in ein Fixierungsmaterial 136 eingebettet sind. Bei dem Fixierungsmaterial 136 kann es sich bespielsweise um ein Betonbauteil handeln, das wiederum im Erdreich oder dergleichen festgelegt wird. Überdies ist es auch möglich, die Halteanker 135 an entsprechend anderen Konstruktionen anzuschlagen. Der Ringraum 132 ist mit einer ausgehärteten Verbundmasse 137 ausgefüllt. Auf diese Art und Weise ergibt sich eine innige Verbindung zwischen dem Rohr 102 und dem Rohrstutzen 131, da die Verbundmasse 137 vor dem Aushärten zwischen die Profilierungsvorsprünge 112 und die Profilierung 133 getreten ist und insoweit eine Axialverschiebung zwischen Rohrabschnitt 133 und Rohr 102 verhindert. Der Rohrabschnitt 133 wird durch die Halteanker 135 im Fixierungsmaterial 136 gehalten. Auf diese Art und Weise ist somit -ebenso wie bei den Fig. 9 und 10-eine Fixiermöglichkeit für das Rohr 102 geschaffen.

Die Fig. 12 zeigt ein weiteres Ausführungsbeispiel, das sich von der Fig. 11 lediglich dadurch unterscheidet, daß das Rohr nicht mit Profilierungsvorsprüngen aus-Pulver-bzw. Granulatkörpern versehen ist, sondern an seiner Kunststoffbeschichtung eine Wendelrippe 105 aufweist.

Als Verbundmasse 137 kann vorzugsweise Kunstharz eingesetzt werden. Jedoch ist es auch möglich, Beton zu verwenden.

Schließlich sei noch darauf hingewiesen, daß beim Aufbringen der Ringrippe 105 auf die Kunststoffbeschichtung des Rohres Andruckwalzen vorgesehen sein können, die den Wendelsteg fest auf die Kunststoffoberfläche pressen und auf diese Art und Weise das Festlegen der Wendelrippe unterstützen.

Alle in der Beschreibung erwähnten und in der Zeichnung dargestellten Merkmale sind erfindungswesentlich, auch soweit sie in den Ansprüchen nicht ausdrücklich beansprucht sind.

## Ansprüche

1. Verfahren zur Ummantelung von Stahlteilen,auf deren Mantelfläche eine Kunststoffbeschichtung aufgebracht wird, die zumindest bereichsweise mit einem Umbettungsmaterial in Kontakt bringbar ist, bzw. in Kontakt steht, wobei die von der Außenfläche der Kunststoffbeschichtung gebildete Grenzfläche zum Umbettungsmaterial mit Profilierungsvorsprüngen versehen ist, dadurch gekennzeichnet, daß auf die noch nicht vollständig ausgehärtete Kunststoffbeschichtung (5,103) ein körniges Pulver (8,112) bzw. Granulat derart aufgebracht wird, daß die einzelnen Pulverkörner zur Bildung der Profilierungsvorsprünge (Rauhbelag 9) nur teilweise von der Beschichtungsoberfläche (7,103') aufgenommen sind.

2. Verfahren nach Anspruch 1, dadurch gekennzeichnet, daß als Pulver (8,112) Kunststoffpulver aufgebracht wird.

3. Verfahren nach Anspruch 1 und/oder 2, dadurch gekennzeichnet, daß für die Kunsttoffbeschichtung (5,103) und das Pulver (8,112) der gleiche Werkstoff verwendet wird.

4. Verfahren nach einem oder mehreren der vorhergehenden Ansprüche, dadurch gekennzeichnet, daß als Kunsttoffbeschichtung (5,103) eine Thermoplastschicht, insbesondere eine Polyäthylenschicht (6), aufgetragen wird, die sich beim Aufbringen des Pulvers (8,112) durch Wärmebehandlung in gelierendem Zustand befindet.

5. Verfahren nach Anspruch 4, dadurch gekennzeichnet, daß als Pulver (8,112) ein Thermoplastpulver, insbesondere ein Polyäthylenpulver (10), aufgetragen wird.

6. Verfahren nach einem oder mehreren der vorhergehenden Ansprüche, dadurch gekennzeichnet, daß für die Kunststoffbeschichtung (5,103) und/oder das Pulver (8,112) Polyäthylen und/oder Äthylencopolymer verwendet wird.

7. Verfahren nach Anspruch 1 und/oder 2, dadurch gekennzeichnet, daß als Kunststoffbeschichtung (5) eine Duroplastschicht, insbesondere eine Epoxyd-Harz-Schicht (11), aufgetragen wird, die sich beim Aufbringen des Pulvers (8), aufgrund noch nicht vollständiger Aushärtung, in noch klebrigem Zustand befindet.

8. Verfahren nach einem oder mehreren der vorhergehenden Ansprüche, dadurch gekennzeichnet, daß als Pulver (8) Duroplastpulver (13), insbesondere Epoxyd-Harz-Pulver, aufgetragen wird.

9. Verfahren nach einem oder mehreren der vorhergehenden Ansprüche, dadurch gekennzeichnet, daß das Pulver (8,112) auf die Kunststoffbeschichtung (5,103) aufgeblasen, aufgestreut oder aufgeworfen wird.

10. Verfahren nach einem oder mehreren der vorhergehenden Ansprüche, dadurch gekennzeichnet, daß das Auftragen des Pulvers (8,112) durch ein elektrostatisches Feld unterstützt wird.

11. Verfahren zur Ummantelung von Stahlteilen, insbesondere Rohren, auf deren Mantelfläche eine Kunststoffbeschichtung aufgebracht wird, die zumindest bereichsweise mit einem Umbettungsmaterial in Kontakt bringbar ist bzw. in Kontakt steht, ·wobei die von der Außenfläche der Kunststoffbeschichtung gebildete Grenzfläche zum Umbettungsmaterial mit Profilierungsvorsprüngen versehen ist, dadurch gekennzeichnet, daß die Profilierungs vorsprünge von den Seitenflanken (105') einer auf die erhitzte Kunststoffbeschichtung (Bahn 108) extrudierten Wendelrippe (105) gebildet sind.

12. Verfahren nach Anspruch 11, dadurch gekennzeichnet, daß zeitlich unmittelbar nach dem Aufbringen der thermoplastischen Kunststoffbeschichtung (108) auf diese die Wendelrippe (105) unter Beaufschlagung der Beschichtungsaußenseite und/oder der Befestigungsseite der Wendelrippe mit einer Wärmequelle (110,113) zur Aufrechterhaltung der Oberflächen-Schmelztemperatur aufgebracht wird.

13. Verfahren nach Anspruch 12, dadurch gekennzeichnet, daß die aufgebrachte Kunststoffbeschichtung (5,103) bis zum Aufbringen der Wendelrippe (105) bzw. der Pulver-/Granulatkörner 112 zur Erhöhung der Strukturfestigkeit der Kunststoffbeschichtung (5,103) gekühlt wird.

14. Mit Kunststoffbeschichtung (Rauhbelag 9) versehenes Stahlteil, das zumindest bereichsweise in ein Umbettungsmaterial einbettbar bzw. eingebettet ist, wobei die von der Außenfläche der Kunststoffbeschichtung gebildete Grenzfläche zum Umbettungsmaterial mit Profilierungsvorsprüngen versehen ist, dadurch gekennzeichnet, daß die Profilierungsvorsprünge der Kunststoffbeschichtung (5,103) von die Beschichtungsmantelfläche überragenden Pulverkörnern (Pulver 8,112) bzw. Granulatkörnern gebildet sind.

15. Stahlteil nach Anspruch 14, dadurch gekennzeichnet, daß das Pulver (8,112) ein Kunststoff-Pulver ist.

16. Stahlteil nach Anspruch 15, dadurch gekennzeichnet, daß die Kunststoffbeschichtung (5,103) und das Pulver (8,112) aus dem gleichen Werkstoff bestehen.

17. Stahlteil nach einem oder mehreren der vorhergehenden Ansprüche, gekennzeichnet durch eine unterschiedliche Härte der Profilierungsvorsprünge und der Kunststoffbeschichtung (extrudierte Bahn 108).

18. Stahlteil nach einem oder mehreren der vorhergehenden Ansprüche, dadurch gekennzeichnet, daß das Umbettungsmaterial (130,137) zur Fixierung des insbesondere als Rohr (101,102) ausgebildeten Materiales ortsfest angeordnet ist.

19. Stahlteil nach Anspruch 18, dadurch gekennzeichnet, daß das Umbettungsmaterial als im Erdreich festlegbarer Ankerblock (130) ausgebildet ist.

20. Stahlteil nach Anspruch 18, dadurch gekennzeichnet, daß für eine Fixierung des mit Profilierungsvorsprüngen versehenen Stahlbauteils ein mit Halteankern (135) versehener Rohrabschnitt (131) das Stahlbauteil umgibt, wobei der Rohrabschnitt (131) an seiner Innenseite mit Axialkräfte aufnehmender Profilierung (133) versehen ist und daß der Ringraum (132) zwischen Stahlbauteil und Rohrabschnitt (131) mit einer ausgehärteten Verbundmasse (137) gefüllt ist.

21. Stahlteil nach Anspruch 20, dadurch gekennzeichnet, daß die Verbundmasse (137) Kunstharz ist.

22. Stahlteil nach Anspruch 20 und/oder 21, dadurch gekennzeichnet, daß die Profilierung (133) von einem mit der Innenseite des Rohrabschnittes (131) verbundenen Wendelsteg (134) gebildet ist.

# FIG. 1

# FIG. 2

# FIG.3

0 261 343

FIG. 4

106
104
102'

103

105

102

101

FIG. 5

103' 102'   105'   105 105' 103 101  104   106

102   105

FIG.6

103  110  108  102

x

y

105  109  107

FIG.7

104  112  106  103'  103

102

102'  112'

FIG.8

113  112  103  108  102

x

y

111  107

120

## FIG.9

102

130

112

## FIG. 10

101

130

105

FIG.11

FIG.12